# EUROPÄISCHE PATENTANMELDUNG

(11) **EP 1 014 057 A1**
(43) Veröffentlichungstag der Anmeldung: **28.06.2000**
(21) Anmeldenummer: 99124733.9
(22) Anmeldetag: 13.12.1999
(51) Int. Cl.: G01K 1/08

(54) **Temperaturmessanordnung mit einem Anschlusskopf**

(30) Priorität: 22.12.1998 DE 19859596
(71) Anmelder: ABB PATENT GmbH, 68309 Mannheim (DE)
(72) Erfinder: Huck, Ralf, Dr. rer. nat., 63457 Hanau (DE); Reusswig, Dirk, 63589 Linsengericht (DE)
(74) Vertreter: Schmidt, Michael, Dipl.-Phys.

(57) **Zusammenfassung**

Die Erfindung betrifft eine Temperaturmeßanordnung mit einem Anschlußkopf und einem am Anschlußkopf angeordneten Schutzrohr in welchem ein Temperaturfühler angeordnet ist. Um bei einer Temperaturmeßanordnung dieser Art einen hermetischen Abschluß zu erreichen, ist erfindungsgemäß vorgeschlagen, daß der Anschlußkopf (1) mit einem elektrischen Schnellanschluß (2) versehen ist, mit welchem innerhalb des Meßkopfes der Temperaturfühler (4) elektrisch direkt verbunden ist und von außen elektrisch steckkontaktierbar ist, und daß das Schutzrohr (5) mittels Klebung (6) mit dem Anschlußkopf (1) dicht verbunden ist.

## Beschreibung

Die Erfindung betrifft eine Temperaturmeßanordnung mit einem Anschlußkopf und einem am Anschlußkopf angeordneten Schutzrohr, in welchem ein Temperaturfühler angeordnet ist gemäß Oberbegriff des Patentanspruches 1.

Temperaturfühler dieser Art kommen in Industrieproduktionsanlagen zum Einsatz. Weitere Einsatzgebiete können auch Energieerzeugungsanlagen oder Betriebsanlagen für Wasseraufbereitung, chemische Anlagen und dergleichen mehr sein. Der Temperaturfühler als solches befindet sich in einem oftmals metallischen Schutzrohr, um gegen chemische sowie auch physische Einflüsse geschützt zu sein. Das Schutzrohr selbst ist oftmals, insbesondere bezogen auf die Wandstärke in demjenigen Bereich, in dem der Temperaturfühler anzuordnen ist, dünner ausgeführt, um eine möglichst kurze Ansprechzeit für die Temperaturmessung zu erreichen. Weitergehende Maßnahmen, wie beispielsweise Andrücken oder verkleben des Temperaturfühlers an die Innenwandung verbessern diesen thermischen Übergang und damit die Ansprechzeit des Temperaturfühlers. Das Schutzrohr selbst wird dabei wiederum an einen Anschlußkopf angeschraubt. Innerhalb des Anschlußkopfes sind die Anschlußleitungen des Temperaturfühlers mit in den Anschlußkopf über eine beispielsweise Verschraubung hineingeführte Kabel verbunden. Überdies können im besagten Anschlußkopf auch elektrische und/oder elektronische Elemente zur Signalaufbereitung angeordnet sein. Diese sind innerhalb des Anschlußkopfes ebenfalls geschützt vor chemischen und/oder physischen Einwirkungen.

Die äußeren Abmessungen solcher Temperaturmeßanordnungen sind oftmals genormt, so daß die selben universell in Produktionsanlagen eingesetzt werden können. Je nach Einsatzort sind die besagten Temperaturmeßanordnungen bzw. die Anschlußköpfe als solches einer entsprechenden Schutzart unterworfen. So sind beispielsweise zur Gewährleistung der Schutzart IP 66 sogenannte PG-Verschraubungen vorgesehen, mit denen das Anschlußkabel abgedichtet in den Anschlußkopf hineingeführt wird. Hierzu weist der Anschlußkopf in der Regel einen Anschlußstutzen auf, in den die besagte PG-Verschraubung eingeschraubt wird. Zwischen der besagten Verschraubung und dem Anschlußstutzen wird ein Elastomer-Element eingelegt, welches bei entsprechend fester Verschraubung derart gepreßt wird, daß die dadurch bewirkte Deformation zu einem das hineingeführte Kabel abdichtet und zum anderen eine entsprechende Fixierung des Kabels auf Zugbelastung bewerkstelligen soll.

Für den Einsatz an explosionsgefährdeten Standorten innerhalb einer Produktionsanlage, wie dies häufig der Fall ist, muß die Meßanordnung auch entsprechenden sogenannten Ex-Schutzverordnungen genügen.

Überdies hat jedoch auch für ansonsten hinreichende Schutzart IP 66 der besagte Anschlußkopf bzw. die besagte Meßanordnung der bekannten Art Nachteile. So ist die durch die verwendete PG-Verschraubung bewerkstelligte Zugentlastung nur unzureichend und wird insbesondere bei von außen einwirkendem Ölnebel quasi wirkungslos. Im übrigen sind die besagten Elastomer-Dichtungen und auch alle übrigen Elemente nicht geeignet, entsprechend einwirkenden chemischen oder physischen Einflüssen standzuhalten.

Zu diesem Zweck müssen oftmals Sonderapplikationen für den entsprechenden Einsatzort vorgesehen werden. Dies hat jedoch die Konsequenz, daß keine einheitliche Fertigung der entsprechenden Bauteile, aus welcher die Temperaturmeßanordnung besteht, vorgenommen werden kann. Durch die fehlende Uniformität, die beispielsweise allen möglichen Einsatzanforderungen genügt, ist der Produktionsaufwand im speziellen kostspielig.

Eine weitere Schwachstelle insbesondere im Hinblick auf chemische Resistenz ist der Übergang zwischen Anschlußkopf und Schutzrohr. Hier werden bekanntermaßen oftmals Schraubverbindungen gewählt. Zur Einbringung entsprechender Knick- oder Biegefestigkeit werden weitergehend Überwurfmuttem auf die besagte Schraubverbindung geschraubt. Neben der Tatsache, daß eine solche Verbindung aufwendig zu erstellen ist, ergibt sich auch der Nachteil, daß eine alleinige Schraubverbindung, insbesondere wenn die Werkstoffe, die miteinander verschraubt werden, gleichartig sind, nur eine unzureichende Abdichtung ergibt.

Der Erfindung liegt somit die Aufgabe zugrunde, eine Temperaturmeßanordnung der bekannten Art dahingehend weiterzubilden, daß das selbe für alle denkbaren Einsatzfälle hermetisch abgeschlossen ist.

Die gestellte Aufgabe wird bei einer Temperaturmeßanordnung der gattungsgemäßen Art erfindungsgemäß durch die kennzeichnenden Merkmale des Patentanspruches 1 gelöst.

Weitere vorteilhafte Ausgestaltungen der Erfindungen sind in den abhängigen Ansprüchen angegeben.

Das Wesen der Erfindung besteht aus der Zusammenführung zweier scheinbar unabhängiger Maßnahmen, die jedoch insgesamt die Wirkung eines sehr wirkungsvollen hermetischen Abschlusses der Temperaturmeßanordnung ergeben. Eine der Maßnahmen besteht darin, auf eine Verschraubung der üblichen Art zu verzichten und statt dessen einen elektrischen Schnellanschluß am Anschlußkopf vorzusehen, welcher innerhalb des Meßkopfes elektrisch direkt mit dem Temperaturfühler kontaktiert ist von außen einen elektrischen Steckkontakt für einen entsprechenden Stecker aufweist. Die zweite Maßnahme besteht darin, das Schutzrohr mittels Klebung mit dem Anschlußkopf dicht zu verbinden. Beides bewirkt, daß der Anschlußkopf insgesamt hermetisch abgeschlossen ist.

Anschlußköpfe dieser Art weisen zumeist auch einen Deckel auf, insbesondere dann, wenn innerhalb des Anschlußkopfes elektrische oder elektronische Bauelemente zur Meßsignalbehandlung einzubauen oder enthalten sind. Es besteht jedoch kein Problem darin, den Deckel mittels einem Dichtelement hermetisch abzuschließen. Der Deckel als solches wird ohnehin fest mit dem Anschlußkopf verbunden, so daß sowohl eine statische als auch eine dichte Abdeckung des Anschlußkopfes gewährleistet ist.

Eine Bauform dieser Art hat insgesamt den Vorteil, universell für alle Schutzarten und gegebenenfalls auch für einige der Ex-Schutzarten universell einsetzbar zu sein. Es bedarf keiner Applikation mehr, auf den entsprechenden Einsatzort, was im übrigen die Fertigung solcher Meßanordnungen vereinfacht.

In weiterer Ausgestaltung der Erfindung wird das Schutzrohr in die Anschlußkopfbohrung unter vorheriger Erstellung einer Gleitpassung eingebracht. Zur Bewerkstelligung einer Gleitpassung muß das Maß der Bohrung und das Außenmaß des Schutzrohres entsprechende Toleranzgrenzen einhalten und im übrigen eine entsprechende Oberflächenbeschaffenheit gewährleisten. Die Einbringung des Schutzrohres in die besagte Gleitpassung erfolgt dann mittels Kleber, der den verbliebenen minimalen Luftspalt klebeschlüssig verschließt. Die Klebung weist in Verbindung mit der Gleitpassung eine gute Statik im Hinblick auf Knick- oder Bruchverhinderung auf.

Eine weitere Ausgestaltung besteht darin, zwischen Schutzrohr und Anschlußkopf eine Schraubverbindung beizubehalten, jedoch die selbe mit einer Klebung abzudichten. Auch hierdurch ist eine gute hermetische Abdichtung gegeben.

Die elektrische Kontaktierung zwischen Temperaturfühler und Schnellanschluß kann durch eine stoffschlüssige Verbindung, beispielsweise eine Lötung, erfolgen. Eine weitere Möglichkeit besteht darin, auch eine Steckkontaktierung zwischen Schnellanschluß und Temperaturfühler vorzunehmen.

Wesentlich ist hierbei, daß, wenn der Temperaturfühler vor Ort eingebaut werden soll, der selbe nicht mehr geöffnet werden muß, um die elektrische Kontaktierung vorzunehmen. Er kann als solches bereits vorgefertigt eingesetzt werden und die Kontaktierung erfolgt über den elektrischen Schnellanschluß von außen mit einem einfachen Stecker. Diese Steckerschnellanschlußverbindung kann dabei wiederum mit entsprechenden Überwurfkapselungen und -abdichtungen versehen sein, um auch nach Erstellung des Steckkontaktes einen bis nach außen geführten hermetischen Abschluß der elektrischen Kontaktstelle besonders im Hinblick auf Ex-Schutz zu gewährleisten.

Ein Ausführungsbeispiel der Erfindung ist in der Zeichnung dargestellt und nachfolgend näher beschrieben.

Es zeigt::
- Fig. 1:: Anschlußkopf mit zum Schutzrohr rechtwinkligen Ansatz des elektrischen Anschlusses.
- Fig. 2:: Temperaturmeßanordnung mit elektrischer Kontaktierung parallel zur Schutzrohrachse.

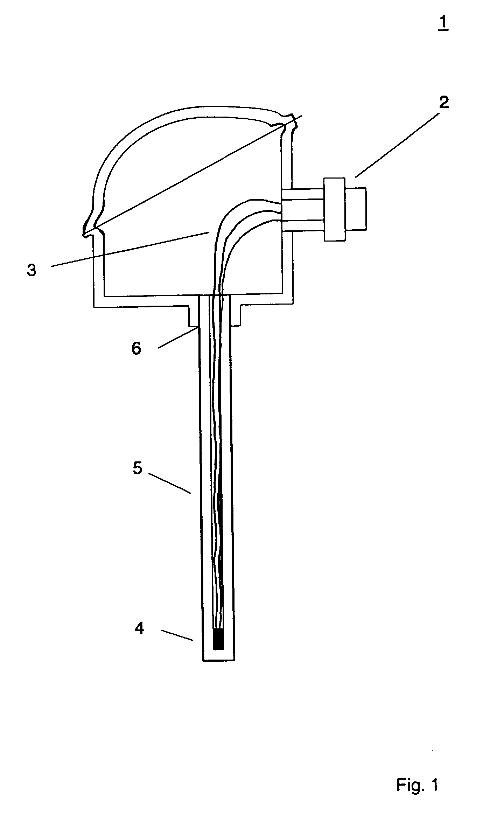

Figur 1 zeigt einen Anschlußkopf 1 der herkömmlichen Bauart, bei welchem hier erfindungsgemäß die Kontaktierung des Temperaturfühlers über einen Schnellanschluß 2 erfolgt. Dieser wird seitlich am Anschlußkopf 1 fest angeordnet und innen erfolgt eine direkte Kontaktierung mit den Anschlußkabeln 3 des Temperaturfühlers 4. Es werden also keine noch aufwendig abzudichtenden Kabel mehr nach außen geführt, sondern außen befindet sich eine Steckkontaktanordnung. Dies erspart im übrigen darüber hinaus gehend auch noch weitere Kontaktelemente und Kontaktierungszwischenebenen innerhalb des Anschlußkopfes. Am Anschlußkopf 1 ist bodenseitig das Schutzrohr 5 eingeführt, weiches an der besagten Übergangsstelle 6 geklebt ist. Die dadurch erreichte Funktion und Wirkung ist oben bereits beschrieben.

Eine weitergehende Möglichkeit besteht natürlich auch darin, weiterhin eine Schraubverbindung zu verwenden, diese jedoch mit einer Überwurfmutter zu sichern und anschließend erfindungsgemäß eine Klebung zum hermetischen Abschluß darüber zu ziehen.

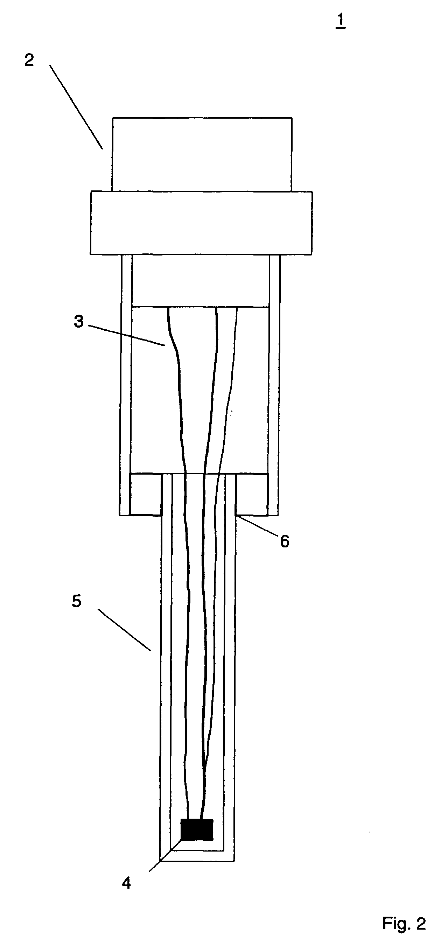

Figur 2 zeigt eine Ausführungsform, bei dem ein Anschlußkopf 1 in Form eines Rohrabschnittes verwendet wird. Dadurch liegt der elektrische Anschluß 2, das heißt die Anschlußachse, parallel zum Schutzrohr 5, wodurch die gesamte Anordnung schlanker wird. Solche Temperaturfühler werden dort eingebaut, wo räumliche Platzverhältnisse dies bedingen. Ansonsten ist die Verbindung 6 zwischen Schutzrohr 5 und Anschlußgehäuse 1 mit den selben Alternativen realisierbar wie in Figur 1; hierbei ist die durch Verklebung erreichte hermetische Abschließung wichtig. Der Schnellanschluß wird dann entsprechend axial eingesetzt und ebenso direkt mit den Anschlußkabeln des Temperaturfühlers kontaktiert. Auch hierbei wird der hermetische Abschluß der gesamten Anordnung beibehalten, da die elektrischen Steckkontakte hermetisch abgedichtet nach außen geführt werden.

## Patentansprüche

1. Temperaturmeßanordnung mit einem Anschlußkopf und einem am Anschlußkopf angeordneten Schutzrohr, in welchem ein Temperaturfühler angeordnet ist,
**dadurch gekennzeichnet,**
daß der Anschlußkopf (1) mit einem elektrischen Schnellanschluß (2) versehen ist, mit welchem innerhalb des Meßkopfes der Temperaturfühler (4) elektrisch direkt verbunden und von außen elektrisch steckkontaktierbar ist und daß das Schutzrohr (5) mittels Klebung (6) mit dem Anschlußkopf (1) dicht verbunden ist.

2. Temperaturmeßanordnung nach Anspruch 1,
**dadurch gekennzeichnet,**
daß die Klebung (6) in Verbindung mit einer Gleitpassung zwischen Schutzrohr und Anschlußkopfbohrung angewendet wird.

3. Temperaturmeßanordnung nach Anspruch 1,
**dadurch gekennzeichnet,**
daß die Klebung (6) in Verbindung mit einer Schraubverbindung zwischen Schutzrohr und Anschlußrohr angewendet wird.

4. Temperaturmeßanordnung nach einem der vorhergehenden Ansprüche,
**dadurch gekennzeichnet,**
daß die elektrische Kontaktierung zwischen Temperaturfühler (4) und Schnellanschluß durch eine stoffschlüssige Verbindung erfolgt.

5. Temperaturmeßanordnung nach einem der vorhergehenden Ansprüche,
**dadurch gekennzeichnet,**
daß die elektrische Kontaktierung zwischen Temperaturfühler (4) und Schnellanschluß durch eine Steckkontaktierung direkt zwischen Anschlußstiften des Schnellanschlusses (2) und Kabel des Temperaturfühlers (4) erfolgt.
